# FASCICULE DE BREVET EUROPEEN

(11) **EP 3 648 206 B1**
(45) Date de publication et mention de la délivrance du brevet: **15.09.2021**
(21) Numéro de dépôt: 19203422.1
(22) Date de dépôt: 15.10.2019
(51) Int. Cl.: H01M 4/134, H01M 4/38, H01M 4/58, H01M 4/62, H01M 10/0525, H01M 10/0568, H01M 10/0569, H01M 4/02

(54) **ACCUMULATEUR ÉLECTROCHIMIQUE AU LITHIUM DU TYPE LITHIUM-SOUFRE COMPRENANT UN MATÉRIAU D'ÉLECTRODE NÉGATIVE SPÉCIFIQUE**
ELEKTROCHEMISCHER GENERATOR AUF LITHIUMBASIS VOM TYP LITHIUM-SCHWEFEL, DER EIN SPEZIFISCHES NEGATIVES ELEKTRODENMATERIAL UMFASST
LITHIUM ELECTROCHEMICAL BATTERY SUCH AS LITHIUM-SULPHUR COMPRISING A SPECIFIC NEGATIVE ELECTRODE MATERIAL

(30) Priorité: 29.10.2018 FR 1860011
(43) Date de publication de la demande: 06.05.2020
(73) Titulaire: Commissariat à l'énergie atomique et aux énergies alternatives, 75015 Paris (FR)
(72) Inventeur: CHAVILLON, Benoît, 38054 GRENOBLE CEDEX 09 (FR); INVERNIZZI, Ronan, 38054 GRENOBLE CEDEX 09 (FR); MAYOUSSE, Eric, 38054 GRENOBLE CEDEX 09 (FR)
(74) Mandataire: Brevalex

(56) Documents cités:
- EP-A1- 0 569 035
- FR-A1- 2 948 233
- JP-A- 2012 142 101
- US-A- 3 980 495
- US-A- 4 069 111
- DATABASE COMPENDEX [Online] ENGINEERING INFORMATION, INC., NEW YORK, NY, US; 1979, JERABEK E C ET AL: "DISCHARGE CHARACTERISTICS OF LITHIUM ALLOY ANODES IN LITHIUM/IODINE CELLS.", XP002792572, Database accession no. EIX80080003699 & JOURNAL OF GEOPHYSICAL RESEARCH 1979 ELECTROCHEM SOC, INC, vol. 79-2, 1979, pages 17-19,
- GUIDOTTI R A ET AL: "Thermally activated (''thermal'') battery technology", JOURNAL OF POWER SOURCES, ELSEVIER SA, CH, vol. 161, no. 2, 27 octobre 2006 (2006-10-27), pages 1443-1449, XP025084945, ISSN: 0378-7753, DOI: 10.1016/J.JPOWSOUR.2006.06.013 [extrait le 2006-10-27]

## Description

### DOMAINE TECHNIQUE

La présente invention a trait à un accumulateur électrochimique au lithium du type lithium-soufre comprenant, au sein d'une cellule, un matériau d'électrode négative spécifique qui présente des propriétés électrochimiques efficaces tout en pouvant présentant une épaisseur d'électrode plus fine qu'une électrode comprenant uniquement du lithium métallique et présentant ainsi un intérêt tout particulier pour les applications de puissance.

Le domaine de l'invention peut être défini comme celui des dispositifs de stockage d'énergie, en particulier celui des accumulateurs électrochimiques du type lithium-soufre.

### ÉTAT DE LA TECHNIQUE ANTÉRIEURE

Les dispositifs de stockage d'énergie sont classiquement des accumulateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydo-réduction, moyennant quoi il y a production d'électrons à l'origine du courant électrique et productions d'ions qui vont circuler d'une électrode à l'autre par le biais d'un électrolyte.

Des accumulateurs souscrivant à ce principe actuellement les plus usités sont les suivants :
*les accumulateurs Ni-MH utilisant de l'hydrure métallique et de l'oxyhydroxyde de nickel comme matériaux d'électrode ;
*les accumulateurs Ni-Cd utilisant du cadmium et de l'oxyhydroxyde de nickel comme matériaux d'électrode ;
*les accumulateurs Acide-Plomb utilisant du plomb et de l'oxyde de plomb PbO₂ comme matériaux d'électrode ; et
*les accumulateurs au lithium, tels que les accumulateurs lithium-ion, utilisant classiquement, en tout ou partie, des matériaux lithiés comme matériaux d'électrode.

Le lithium métallique, qui constitue classiquement, le matériau actif de l'électrode négative dans les accumulateurs au lithium, est un matériau utilisable dans la plupart des systèmes tant son énergie massique et volumique est importante. En effet, le lithium présente une densité de 0,534 g/cm³ et une énergie massique de 3861 mAh/g ainsi qu'une densité d'énergie volumique de 2061 mAh/cm³. Ces valeurs restent très élevées par rapport à celles obtenues avec d'autres matériaux d'électrode négative, notamment grâce à la réaction Li → Li⁺ + e⁻, cette réaction impliquant l'échange d'un seul électron par atome de lithium, lequel est très léger et générant ainsi une quantité d'énergie importante pour un faible rapport volume/masse. Il est donc tout naturel que les accumulateurs au lithium aient détrôné les autres types d'accumulateurs.

Actuellement, une nouvelle technologie d'accumulateur à base de lithium se profile comme une alternative prometteuse, cette technologie étant la technologie lithium-soufre.

L'utilisation du soufre, comme matériau actif, d'une électrode positive est particulièrement attractive, car le soufre présente une capacité spécifique théorique très élevée pouvant être jusqu'à plus de 10 fois supérieure à celle obtenue pour des matériaux conventionnels d'électrode positive (de l'ordre de 1675 mAh.g⁻¹ au lieu de 140 mAh.g⁻¹ pour LiCoO₂). Qui plus est, le soufre est présent, de manière abondante, sur la planète et se caractérise de ce fait par des coûts faibles. Enfin, il est peu toxique. Toutes ces qualités contribuent à le rendre particulièrement attractif en vue d'une mise en place à grande échelle, notamment pour les véhicules électriques, ce d'autant plus que les accumulateurs lithium/soufre pourraient permettre d'atteindre des densités d'énergie massique pouvant aller de 300 à 600 Wh.g⁻¹.

D'un point de vue fonctionnel, la réaction à l'origine de la production de courant (c'est-à-dire lorsque l'accumulateur est en mode de décharge) met en jeu une réaction d'oxydation du lithium à l'électrode négative qui produit des électrons, qui vont alimenter le circuit extérieur auquel sont reliées les électrodes positive et négative, et une réaction de réduction du soufre à l'électrode positive.

Ainsi, de manière explicite, en processus de décharge, la réaction globale est la suivante :

S₈ + 16Li → 8Li₂S

qui est la somme de la réaction de réduction du soufre à l'électrode positive (S₈ + 16e⁻ → 8S²⁻) et de la réaction d'oxydation du lithium à l'électrode négative (Li → Li⁺ + e⁻).

Il est entendu que les réactions électrochimiques inverses se produisent lors du processus de charge.

Comme il ressort de l'équation ci-dessus, la réaction implique un échange de 16 électrons, ce qui justifie la capacité spécifique élevée du soufre (1675 mAh.g⁻¹).

D'un point de vue mécanistique, et sans être lié par la théorie, à l'état initial (c'est-à-dire lorsque l'accumulateur est à l'état de charge complet), le matériau actif, qui est du soufre élémentaire, est présent à l'état solide dans l'électrode positive. Au cours de la réduction du soufre, c'est-à-dire au cours de la décharge, les molécules cycliques de soufre sont réduites et forment des polysulfures de lithium, de formule générale Li₂Sₙ, avec n pouvant aller de 1 à 8. Puisque la molécule de départ est S₈, les premiers composés formés sont les polysulfures de lithium à chaînes longues, tels que Li₂S₈ ou Li₂S₆. Ces polysulfures de lithium étant solubles dans les électrolytes organiques, la première étape de décharge consiste donc en la solubilisation du matériau actif dans l'électrolyte et la production de polysulfures de lithium à chaînes longues en solution. Puis, au fur et à mesure que la réduction du soufre se poursuit, la longueur de chaîne des polysulfures est graduellement réduite et des composés tels que Li₂S₅, Li₂S₄ ou encore Li₂S₂ sont formés en solution. Enfin, le produit final de réduction est le sulfure de lithium (Li₂S), qui, lui, est insoluble dans les électrolytes organiques. Ainsi, la dernière étape du mécanisme de réduction du soufre consiste en la précipitation du matériau actif soufré.

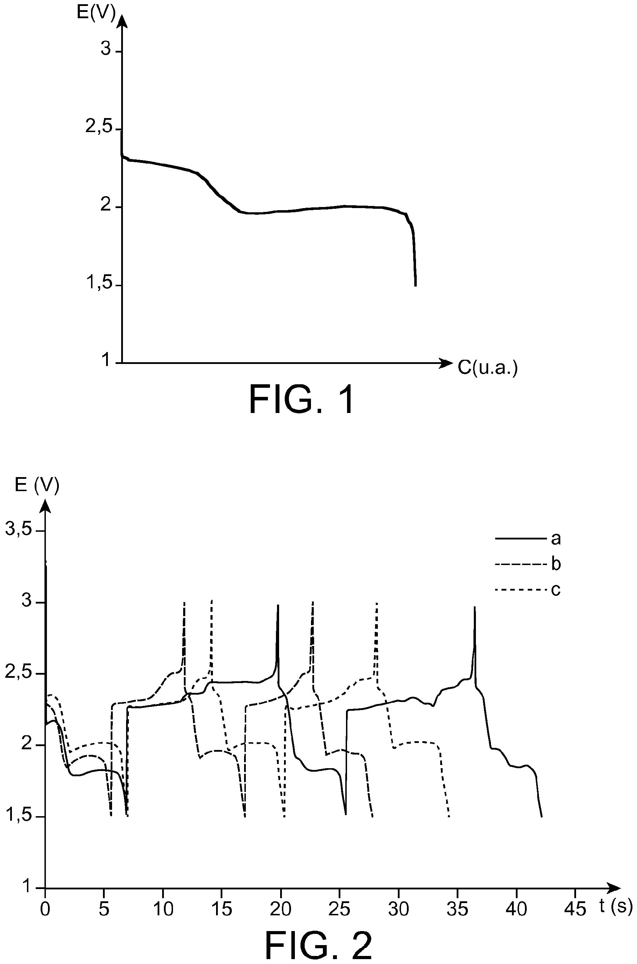

Ce mécanisme peut être corrélé au profil de décharge illustré sur la figure 1, qui représente un graphique illustrant l'évolution du potentiel E (en V) en fonction de la capacité C (en u.a).

En effet, dans ce profil, le premier plateau peut être attribué à la formation des chaînes longues de polysulfures de lithium, alors que le second plateau correspond à la réduction de la taille des chaînes soufrées, jusqu'à passivation de l'électrode positive.

Quant au lithium métallique utilisé à l'électrode négative, bien que présentant les avantages mentionnés ci-dessus, il peut présenter un inconvénient lié à la formation éventuelle de dendrites de lithium, lors des processus de charge répétés, qui peuvent court-circuiter l'accumulateur.

Enfin, l'utilisation du lithium peut présenter des difficultés de manipulation pour la fabrication des électrodes négatives. En effet, le lithium présente une capacité d'adhérence sur tous types de métaux ou alliages, tels que l'inox, l'acier voire même sur certains polymères fluorés. Ainsi, il peut s'avérer difficile à manipuler et à mettre en forme, par exemple, par laminage ou extrusion sauf à prendre des précautions particulières, notamment en travaillant sous atmosphère neutre et dénuée d'humidité et/ou en travaillant avec des outils revêtus d'une couche de polymère non réactif, tel que du polyéthylène basse densité. Enfin, pour une utilisation dans des accumulateurs du type lithium-soufre, il peut être intéressant d'utiliser pour constituer l'électrode négative des feuillards de lithium très fins, par exemple, d'une épaisseur allant de 10 à 50 µm en vue notamment d'augmenter la densité de puissance. Toutefois, une telle épaisseur est impossible à atteindre avec des laminoirs standards et lorsque de tels feuillards sont disponibles dans le commerce, ils sont très onéreux, même lorsqu'ils sont déjà prélaminés sur des collecteurs de courant (par exemple, un feuillard de cuivre).

Aussi, au vu des inconvénients mentionnés ci-dessus, les auteurs de la présente invention se sont fixé pour objectif de proposer un nouveau type d'accumulateur lithium-soufre qui permette de bénéficier des avantages inhérents à l'utilisation du lithium pour la constitution de l'électrode négative tout en limitant les inconvénients, notamment ceux relatifs à la difficulté de manipulation de lithium pour réaliser des électrodes négatives de faibles épaisseurs.

### EXPOSÉ DE L'INVENTION

Ainsi, l'invention a trait à un accumulateur lithium-soufre comprenant au moins une cellule électrochimique comprenant une électrode positive comprenant, comme matériau actif, au moins un matériau soufré, une électrode négative et un électrolyte conducteur d'ions lithium disposé entre ladite électrode négative et ladite électrode positive, caractérisé en ce que l'électrode négative comprend, comme matériau actif, un alliage de lithium et de calcium, dans lequel le calcium est présent dans l'alliage à hauteur de 2 à 34% atomique et, de préférence, en ce que l'électrode négative est constituée uniquement dudit matériau actif.

Avant d'entrer plus en détail dans l'exposé de l'invention, nous précisons les définitions suivantes.

Par % atomique, on entend, classiquement, dans ce qui précède et ce qui suit, le rapport correspondant au rapport du (nombre total d'atomes de calcium/nombre total d'atomes de l'alliage)*100.

Par électrode positive, on entend, classiquement, dans ce qui précède et ce qui suit, l'électrode qui fait office de cathode, quand l'accumulateur débite du courant (c'est-à-dire lorsqu'il est en processus de décharge) et qui fait office d'anode lorsque l'accumulateur est en processus de charge.

Par électrode négative, on entend, classiquement, dans ce qui précède et ce qui suit, l'électrode qui fait office d'anode, quand l'accumulateur débite du courant (c'est-à-dire lorsqu'il est en processus de décharge) et qui fait office de cathode, lorsque l'accumulateur est en processus de charge.

Par matériau actif de l'électrode positive, on entend, classiquement, dans ce qui précède et ce qui suit, le matériau qui est directement impliqué dans la réaction de réduction se déroulant au niveau de l'électrode positive, ce matériau actif étant un matériau actif soufré.

Par matériau actif de l'électrode négative, on entend, classiquement, dans ce qui précède et ce qui suit, le matériau qui est directement impliqué dans la réaction d'oxydation se déroulant au niveau de l'électrode négative, ce matériau actif étant, dans le cadre de cette invention, un alliage de lithium et de calcium tel que défini ci-dessus.

L'électrode négative comportant un tel matériau actif peut être facilement préparée par lamination et présenter des épaisseurs faibles compatibles pour obtenir une amélioration de la densité de puissance.

Plus spécifiquement, l'électrode négative peut être, de préférence, constituée uniquement du matériau actif, qui est l'alliage de lithium et de calcium tel que mentionné ci-dessus.

D'un point de vue structural, l'électrode négative peut se présenter sous forme d'une feuille ou plaque présentant une épaisseur allant de 5 à 200 µm, plus spécifiquement de 20 à 100 µm.

Avantageusement, l'alliage de lithium et de calcium constitutif du matériau actif de l'électrode négative est un alliage comportant exclusivement du lithium et du calcium, ce qui signifie que l'alliage comporte du calcium à hauteur de 2 à 34 % atomique et du lithium à hauteur de 66 à 98% atomique.

Plus spécifiquement, il peut être un alliage de lithium comportant du calcium à hauteur de 2 à 15% atomique (ce qui signifie, en d'autres termes, que, lorsque l'alliage de lithium et de calcium comporte exclusivement du lithium et du calcium, le lithium est présent dans l'alliage à hauteur de 85 à 98% atomique).

Le calcium dans l'alliage de lithium et de calcium peut se présenter, en tout ou partie, sous forme de CaLi₂. Dans ce dernier cas, l'alliage de lithium et de calcium peut être considéré comme étant un matériau comprenant une matrice en lithium dont tout ou partie du calcium se trouve sous forme d'inclusions de CaLi₂ dans la matrice en lithium.

Les auteurs de la présente invention ont pu mettre en évidence qu'un tel alliage se lamine facilement et présente de bonnes propriétés mécaniques notamment en termes de résistance à la traction, notamment pour des épaisseurs telles que définies ci-dessus. Qui plus est, une électrode comprenant un tel alliage peut être produite à des coûts de fabrication moindres par rapport à une électrode présentant une même épaisseur d'électrode en lithium métallique.

Avantageusement, l'électrode négative peut être autosupportée, c'est-à-dire qu'elle ne nécessite pas d'être apposée sur un support pour être utilisée dans l'accumulateur de l'invention et, plus spécifiquement, qu'elle ne nécessite pas d'être apposée sur un collecteur de courant (ce qui signifie, autrement dit, que l'accumulateur est dénué de collecteur de courant au niveau de l'électrode négative). En variante, elle peut être associée à un support, par exemple, du type collecteur de courant, qui peut être un feuillard ou une grille en au moins un élément métallique conducteur de l'électricité, tel que du cuivre, du nickel, de l'aluminium, de l'inox.

L'électrode positive comprend, comme matériau actif, un matériau actif soufré et éventuellement un additif conducteur de l'électricité et éventuellement un liant organique.

Le matériau actif soufré peut être du soufre élémentaire (S₈), du disulfure de lithium (Li₂S) ou un composé comprenant au moins un groupe disulfure -S-S-, tel qu'un polysulfure de lithium de formule générale Li₂Sn (avec n allant de 2 à 8), un polysulfure organique, un composé organosoufré (tel qu'un poly(disulfure de carbone)) ou un polymère comprenant des groupes disulfures, le ou les groupes disulfures présent(s) dans le polysulfure organique, le composé organosoufré ou le polymère pouvant être rompu(s) lors du processus de décharge et reformé lors du processus de charge.

De préférence, le matériau actif soufré est du soufre élémentaire, conférant ainsi à l'accumulateur une densité d'énergie attrayante de par sa capacité massique de stockage élevée.

L'additif conducteur de l'électricité peut être une poudre de noir de carbone, des nanotubes de carbone, des fibres de carbone, des particules métalliques, des polymères conducteurs ou des mélanges de ceux-ci.

Quant au liant organique, il peut être choisi parmi les liants polymériques suivants :
- des liants polymériques appartenant à la catégorie des polymères cellulosiques, tels que de la carboxyméthylcellulose (connu sous l'abréviation CMC), de la méthylcellulose (connu sous l'abréviation MC) ;
- des liants polymériques appartenant à la catégorie des polymères éthyléniques fluorés, tel que du polytétrafluoroéthylène (connu sous l'abréviation PTFE), le polyfluorure de vinylidène (connu sous l'abréviation PVDF) et ou des copolymères éthyléniques fluorés (tels que les copolymères de fluorure de vinylidène et d'hexafluoropropylène) ;
- des liants polymériques appartenant à la catégorie des polymères vinyliques, tels qu'un poly(alcool vinylique) (connu sous l'abréviation PVA) ; et
- des mélanges de ceux-ci.

A titre structural, l'électrode positive peut se présenter sous forme d'un matériau composite comprenant une matrice en liant(s) polymérique(s), dans laquelle sont dispersés un matériau actif soufré et éventuellement un additif conducteur de l'électricité.

L'électrode positive peut être déposée sur un collecteur de courant, qui peut être en un matériau métallique (composé d'un seul élément métallique ou d'un alliage d'un élément métallique avec un autre élément), tel que du cuivre, un alliage de cuivre, de l'aluminium, un alliage d'aluminium, du nickel, de l'inox, ledit collecteur de courant se présentant, par exemple, sous forme d'une plaque ou feuillard.

A titre d'exemple, l'électrode positive peut comprendre du soufre élémentaire, un additif conducteur de l'électricité du type noir de carbone, un liant organique (par exemple, du polyfluorure de vinylidène), ladite électrode positive étant déposée sur un collecteur de courant du type feuillard en aluminium (par exemple, de 20 µm d'épaisseur).

L'électrolyte conducteur d'ions lithium peut être, en particulier, un électrolyte liquide comprenant au moins un solvant organique et au moins un sel de lithium.

Le ou les solvants organiques peuvent être, par exemple, un solvant comportant une ou plusieurs fonctions éther, nitrile, sulfone et/ou carbonate.

A titre d'exemples de solvants comportant une fonction éther, on peut citer les solvants éthers, tels que le 1,3-dioxolane (symbolisé par l'abréviation DIOX), le tétrahydrofurane (symbolisé par l'abréviation THF), le 1,2-diméthoxyéthane (symbolisé par l'abréviation DME), ou un éther de formule générale CH₃O-[CH₂CH₂O]ₙ₋CH₃ (n étant un entier allant de 1 et 10), tel que le diméthyléther de tétraéthylèneglycol (symbolisé par l'abréviation TEGDME) et les mélanges de ceux-ci.

A titre d'exemples de solvants comportant une fonction carbonate, on peut citer :
- des solvants carbonates cycliques, tel que le carbonate d'éthylène (symbolisé par l'abréviation EC), le carbonate de propylène (symbolisé par l'abréviation PC) ;
- des solvants carbonates linéaires, tels que le carbonate de diéthyle (symbolisé par l'abréviation DEC), le carbonate de diméthyle (symbolisé par l'abréviation DMC), le carbonate d'éthylméthyle (symbolisé par l'abréviation EMC).

De préférence, le solvant organique est un solvant éther ou un mélange de solvants éthers, tels qu'un mélange de diméthyléther de tétraéthylèneglycol et de 1,3-dioxolane.

Le sel de lithium peut être choisi dans le groupe constitué par LiPF₆, LiClO₄, UBF₄, LiAsF₆, Lil, LiNO₃, LiOH, LiR_{f}SO₃ (avec R_{f} correspondant à un groupe perfluoroalkyle comprenant de 1 à 8 atomes de carbone), tel que LiCF₃SO₃, LiN(CF₃SO₂)₂ (appelé également *bis*[(trifluorométhyl)sulfonyl]imidure de lithium correspondant à l'abréviation LiTFSI), LiN(C₂F₅SO₂)₂ (appelé également *bis*[(perfluoroéthyl)sulfonyl]imidure de lithium correspondant à l'abréviation LiBETI), LiN(SO₂F)₂ (appelé également *bis*(fluorosulfonyl)imidure de lithium), LiCH₃SO₃, LiB(C₂O₄)₂ (appelé également *bis*(oxalato)borate de lithium ou LiBOB).

Le sel de lithium peut être présent, dans l'électrolyte, selon une concentration allant de 0,25 M à 2 M, par exemple, 1M.

L'électrolyte conducteur d'ions lithium peut être un électrolyte liquide aqueux (c'est-à-dire dont le solvant est de l'eau) comprenant au moins un sel de lithium, tel que ceux définis ci-dessus, par exemple, LiNO₃ et/ou LiOH.

L'électrolyte liquide, qu'il soit organique ou aqueux, peut comprendre, en outre, un ou plusieurs additifs aptes à conférer des propriétés particulières à l'électrolyte (par exemple, un additif passivant, un additif sécuritaire).

L'électrolyte liquide, qu'il soit organique ou aqueux, peut être amené, dans la ou les cellules électrochimiques des accumulateurs de l'invention, à imprégner un séparateur, lequel est disposé entre l'électrode positive et l'électrode négative de la cellule électrochimique.

Ce séparateur peut être en un matériau poreux apte à accueillir dans sa porosité l'électrolyte liquide et, plus spécifiquement, en un matériau permettant de constituer une réserve d'électrolyte importante tout en permettant une bonne séparation électrique entre les électrodes positive et négative et tout en présentant une masse suffisamment faible pour ne pas pénaliser la masse finale de l'accumulateur.

Ce séparateur peut consister en une membrane en un matériau choisi parmi les fibres de verre (et plus, spécifiquement, un non-tissé de fibres de verre), un matériau polymérique, tel qu'un polytéréphtalate (comme un polytéréphtalate d'éthylène, connu sous l'abréviation PET), une polyoléfine (par exemple, un polyéthylène, un polypropylène), un polyalcool vinylique, un polyamide, un polytétrafluoroéthylène (connu sous l'abréviation PTFE), un polychlorure de vinyle (connu sous l'abréviation PVC) ou un polyfluorure de vinylidène (connu sous l'abréviation PVDF). Le séparateur peut présenter une épaisseur allant de 5 à 300 µm.

Un accumulateur spécifique conforme à l'invention est un accumulateur comprenant une cellule comprenant :
- une électrode négative constituée d'une feuille en alliage de lithium et de calcium comprenant une teneur en calcium de 2% ou 25% atomique, ladite feuille présentant une épaisseur de 100 µm ;
- une électrode positive comprenant, comme matériau actif, du soufre élémentaire S₈, comme additif conducteur de l'électricité, du noir de carbone et comme liant, du polyfluorure de vinylidène, l'électrode positive étant déposée sur un collecteur de courant, par exemple, un feuillard en aluminium de 20 µm d'épaisseur ; et
- un séparateur poreux disposé entre ladite électrode négative et ladite électrode positive, ledit séparateur étant imprégné d'un électrolyte comprenant un sel de lithium LiTFSI dans un mélange de solvants éthers, tel qu'un mélange TEGDME/DIOX.

Les accumulateurs de l'invention peuvent comprendre une enceinte renfermant les différents éléments de l'accumulateur mentionnés ci-dessus, cette enceinte pouvant être rigide ou souple. A titre d'exemples rigides, on peut mentionner celles en acier inoxydable, en acier nickelé, en aluminium ou en titane.

Les accumulateurs de l'invention peuvent, en outre, être adaptées à différents types de formats, tels que le format du type pile bouton, les formats cylindriques, en particulier, les formats AAA, AA, C et D ; les formats bobinés ou spiralés ; le format prismatique.

Les accumulateurs de l'invention peuvent être réalisés par des techniques classiques à la portée de l'homme du métier, par exemple, par empilements des différents éléments constitutifs de l'accumulateur (à savoir, électrode négative, électrode positive et séparateur), cet empilement pouvant être maintenu dans un boîtier. L'alliage constitutif de l'électrode négative peut être réalisé par fusion de lithium et de calcium, par exemple, sur une plaque chauffante, à une température pouvant aller de 140 à 500°C, sous une atmosphère neutre (par exemple, une atmosphère d'argon) suivie, après mélange, d'une trempe du mélange fondu pour former rapidement l'alliage. L'alliage ainsi obtenu peut être mis sous forme d'une plaque ou feuille par laminage en vue d'entrer dans la constitution de l'électrode négative.

D'autres caractéristiques et avantages de l'invention apparaîtront mieux à la lecture du complément de description qui suit, qui se rapporte à un exemple précis de mise en œuvre de l'invention.

### BRÈVE DESCRIPTION DES FIGURES

La figure 1 est graphique illustrant l'évolution du potentiel E (en V) en fonction de la capacité C (en unité arbitraire, u.a) pour un accumulateur lithium-soufre classique.
La figure 2 est un graphique illustrant l'évolution du potentiel E (en V) en fonction du temps t (en s), la courbe a) correspondant à celle obtenue pour le premier accumulateur, la courbe b) correspondant à celle obtenue pour le deuxième accumulateur et la courbe c) correspondant à celle obtenue pour le troisième accumulateur de l'exemple exposé ci-dessous.

### EXPOSÉ DÉTAILLÉ D'UN MODE DE RÉALISATION PARTICULIER

### EXEMPLE

L'exemple suivant illustre deux accumulateurs lithium-soufre conformes à l'invention, se présentant chacun sous forme d'une pile-bouton, comportant :
- une électrode négative constituée d'un disque de 16 mm de diamètre, d'épaisseur 100 µm et composée d'un alliage de lithium et de calcium à hauteur de 2% atomique de calcium (pour le premier accumulateur) ou 25% atomique de calcium (pour le deuxième accumulateur) ;
- une électrode positive constituée d'un disque de 16 mm de diamètre composée d'un matériau composite comprenant du polyfluorure de vinylidène à hauteur de 10% massique et un mélange soufre/noir de carbone à hauteur de 90% massique (le soufre représentant 66% massique du mélange), ladite électrode positive étant déposée sur un collecteur de courant en aluminium de 20 µm d'épaisseur ;
- entre l'électrode négative et l'électrode positive, un séparateur du type Celgard® 2325 (25 µm) couplé à un non-tissé en polyoléfines de type Viledon® (140 µm), l'ensemble formant un disque de 16 mm de diamètre, ledit ensemble étant imprégné d'un électrolyte constitué d'un mélange de solvants TEGDME/DIOX en proportions 50/50 et un sel de lithium LiTFSI 1M.

A titre comparatif, un autre accumulateur lithium-soufre non conforme à l'invention (dit troisième accumulateur) a été réalisé dans cet exemple, cet accumulateur répondant aux mêmes spécificités que ceux de l'invention, si ce n'est que l'électrode négative est en lithium pur.

Ces trois accumulateurs ont été soumis à des tests de cyclage à un régime de C/20-D/20 avec une capacité calculée en fonction de la quantité de soufre introduite dans l'électrode positive.

Les résultats sont reportés sur la figure 2, qui illustrent l'évolution du potentiel E (en V) en fonction du temps t (en s), la courbe a) correspondant à celle obtenue pour le premier accumulateur, la courbe b) correspondant à celle obtenue pour le deuxième accumulateur et la courbe c) correspondant à celle obtenue pour le troisième accumulateur.

Ces trois courbes présentent une allure caractéristique d'un accumulateur lithium-soufre en système de charge-décharge, présentant chacune deux paliers de décharge et de charge. La durée de décharge pour les accumulateurs conformes à l'invention s'échelonne de 6 à 8 heures, ce qui atteste de la possibilité d'utiliser efficacement un alliage de lithium et de calcium pour entrer dans la constitution des électrodes négatives.

En outre, la présence de calcium dans l'alliage de lithium constitutif de l'électrode négative contribue à rendre l'alliage plus facile à laminer que du lithium pur, ce qui permet d'envisager l'utilisation d'un tel alliage pour constituer des électrodes négatives plus fines et ainsi des surfaces développées plus importantes, ce qui peut s'avérer un atout majeur dans les accumulateurs destinés à des applications de puissance.

## Revendications

1. Accumulateur lithium-soufre comprenant au moins une cellule électrochimique comprenant une électrode positive comprenant, comme matériau actif, au moins un matériau soufré, une électrode négative et un électrolyte conducteur d'ions lithium disposé entre ladite électrode négative et ladite électrode positive, **caractérisé en ce que** l'électrode négative est constituée uniquement d'un matériau actif, qui est un alliage de lithium et de calcium, dans lequel le calcium est présent dans l'alliage à hauteur de 2 à 34% atomique.

2. Accumulateur lithium-soufre selon la revendication 1, dans lequel l'électrode négative se présente sous forme d'une feuille ou plaque présentant une épaisseur allant de 5 à 200 µm.

3. Accumulateur lithium-soufre selon l'une quelconque des revendications précédentes, dans lequel l'alliage de lithium et de calcium comporte exclusivement du lithium et du calcium.

4. Accumulateur lithium-soufre selon l'une quelconque des revendications précédentes, dans lequel l'alliage de lithium et de calcium est un alliage de lithium comportant du calcium à hauteur de 2 à 15% atomique.

5. Accumulateur lithium-soufre selon l'une quelconque des revendications précédentes, dans lequel le calcium dans l'alliage de lithium et de calcium se présente, en tout ou partie, sous forme de CaLi₂.

6. Accumulateur lithium-soufre selon l'une quelconque des revendications précédentes, dans lequel l'électrode négative est autosupportée.

7. Accumulateur lithium-soufre selon l'une quelconque des revendications précédentes, dans lequel le matériau actif soufré est du soufre élémentaire (S₈), du disulfure de lithium (Li₂S) ou un composé comprenant au moins un groupe disulfure -S-S-, tel qu'un polysulfure de lithium de formule générale Li₂Sn (avec n allant de 2 à 8), un polysulfure organique, un composé organosoufré ou un polymère comprenant des groupes disulfures.

8. Accumulateur lithium-soufre selon l'une quelconque des revendications précédentes, dans lequel le matériau actif soufré est du soufre élémentaire.

9. Accumulateur lithium-soufre selon l'une quelconque des revendications précédentes, dans lequel l'électrode positive comprend, en outre, un additif conducteur de l'électricité et éventuellement un liant organique.

10. Accumulateur lithium-soufre selon la revendication 9, dans lequel l'additif conducteur de l'électricité est une poudre de noir de carbone, des nanotubes de carbone, des fibres de carbone, des particules métalliques, des polymères conducteurs ou des mélanges de ceux-ci.

11. Accumulateur lithium-soufre selon la revendication 9 ou 10, dans lequel le liant organique est un liant polymérique.

12. Accumulateur lithium-soufre selon l'une quelconque des revendications précédentes, dans lequel l'électrolyte conducteur d'ions lithium est un électrolyte liquide comprenant au moins un solvant organique et au moins un sel de lithium.

13. Accumulateur lithium-soufre selon la revendication 12, dans lequel le ou les solvants organiques sont choisis parmi les solvants comportant une ou plusieurs fonctions éther, nitrile, sulfone et/ou carbonate.

14. Accumulateur lithium-soufre selon la revendication 12 ou 13, dans lequel le solvant organique est un solvant éther ou un mélange de solvants éthers, tels qu'un mélange de diméthyléther de tétraéthylèneglycol et de 1,3-dioxolane.

15. Accumulateur lithium-soufre selon l'une quelconque des revendications 12 à 14, dans lequel le sel de lithium est choisi dans le groupe constitué par LiPF₆, LiClO₄, LiBF₄, LiAsF₆, Lil, LiNO₃, LiOH, LiR_{f}SO₃, avec R_{f} correspondant à un groupe perfluoroalkyle comprenant de 1 à 8 atomes de carbone, LiN(CF₃SO₂)₂, LiN(C₂F₅SO₂)₂, LiN(SO₂F)₂, LiCH₃SO₃ ou LiB(C₂O₄)₂.

## Patentansprüche

1. Lithium-Schwefel-Akkumulator, umfassend wenigstens eine elektrochemische Zelle, umfassend eine positive Elektrode, die als aktives Material wenigstens ein Schwefelmaterial umfasst, eine negative Elektrode und einen lithiumionenleitenden Elektrolyt, der zwischen der negativen Elektrode und der positiven Elektrode angeordnet ist, **dadurch gekennzeichnet, dass** die negative Elektrode ausschließlich aus einem aktiven Material gebildet ist, welches eine Legierung von Lithium und von Kalzium ist, wobei das Kalzium in der Legierung in Höhe von 2 bis 34 Atom-% vorhanden ist.

2. Lithium-Schwefel-Akkumulator nach Anspruch 1, bei dem die negative Elektrode die Form einer Schicht oder Platte aufweist, die eine Dicke von 5 bis 200 µm aufweist.

3. Lithium-Schwefel-Akkumulator nach einem der vorhergehenden Ansprüche, bei dem die Legierung von Lithium und von Kalzium ausschließlich Lithium und Kalzium umfasst.

4. Lithium-Schwefel-Akkumulator nach einem der vorhergehenden Ansprüche, bei dem die Legierung von Lithium und von Kalzium eine Lithiumlegierung ist, die Kalzium in der Höhe von 2 bis 15 Atom-% umfasst.

5. Lithium-Schwefel-Akkumulator nach einem der vorhergehenden Ansprüche, bei dem das Kalzium in der Legierung von Lithium und von Kalzium vollständig oder teilweise die Form von CaLi₂ aufweist.

6. Lithium-Schwefel-Akkumulator nach einem der vorhergehenden Ansprüche, bei dem die negative Elektrode selbsttragend ist.

7. Lithium-Schwefel-Akkumulator nach einem der vorhergehenden Ansprüche, bei dem das aktive Schwefelmaterial elementarer Schwefel (S₈), Lithiumdisulfid (Li₂S) oder eine Verbindung ist, die wenigstens eine Disulfidgruppe -S-S- umfasst, beispielsweise ein Lithiumpolysulfid der allgemeinen Formel Li₂Sn (wobei n von 2 bis 8 geht), ein organisches Polysulfid, eine Organoschwefelverbindung oder ein Polymer, das Disulfidgruppen umfasst.

8. Lithium-Schwefel-Akkumulator nach einem der vorhergehenden Ansprüche, bei dem das aktive Schwefelmaterial elementarer Schwefel ist.

9. Lithium-Schwefel-Akkumulator nach einem der vorhergehenden Ansprüche, bei dem positive Elektrode ferner ein elektrisch leitendes Additiv und gegebenenfalls einen organischen Binder umfasst.

10. Lithium-Schwefel-Akkumulator nach Anspruch 9, bei dem das elektrisch leitende Additiv ein Pulver von Kohlenstoffschwarz, Kohlenstoffnanoröhrchen, Kohlenstofffasern, Metallpartikeln, leitenden Polymeren oder Mischungen von diesen ist.

11. Lithium-Schwefel-Akkumulator nach Anspruch 9 oder 10, bei dem der organische Binder ein Polymerbinder ist.

12. Lithium-Schwefel-Akkumulator nach einem der vorhergehenden Ansprüche, bei dem der lithiumionenleitende Elektrolyt ein flüssiger Elektrolyt ist, der wenigstens ein organisches Lösungsmittel und wenigstens ein Lithiumsalz umfasst.

13. Lithium-Schwefel-Akkumulator nach Anspruch 12, bei dem das oder die organische(n) Lösungsmittel aus den Lösungsmitteln ausgewählt sind, die eine oder mehrere Ether-, Nitril-, Sulfon- und/oder Carbonatfunktionen umfassen.

14. Lithium-Schwefel-Akkumulator nach Anspruch 12 oder 13, bei dem das organische Lösungsmittel ein Ether-Lösungsmittel oder eine Mischung von Ether-Lösungsmitteln ist, beispielsweise eine Mischung aus Dimethylether von Tetraethylenglycol und von 1,3-Dioxolan.

15. Lithium-Schwefel-Akkumulator nach einem Ansprüche 12 bis 14, bei dem das Lithiumsalz ausgewählt ist aus der Gruppe gebildet durch LiPF₆, LiClO₄, LiBF₄, LiAsF₆, Lil, LiNO₃, LiOH, LiR_{f}SO₃, wobei R_{f} einer Perfluoralkylgruppe entspricht, die von 1 bis 8 Kohlenstoffatomen umfasst, LiN(CF₃SO₂)₂, LiN(C₂F₅SO₂)₂, LiN(SO₂F)₂, LiCH₃SO₃ oder LiB(C₂O₄)₂.

## Claims

1. Lithium-sulfur accumulator comprising at least one electrochemical cell comprising a positive electrode comprising, as active material, at least one sulfur-containing material, a negative electrode and an electrolyte conducting lithium ions disposed between said negative electrode and said positive electrode, **characterised in that** the negative electrode consists solely of an active material, which is a lithium and calcium alloy, wherein the calcium is present in the alloy to the extent of 2% to 34% atomic.

2. Lithium-sulfur accumulator according to claim 1, wherein the negative electrode is in the form of a sheet or plate having a thickness ranging from 5 to 200 µm.

3. Lithium-sulfur accumulator according to any preceding claims, wherein the lithium and calcium alloy comprises solely lithium and calcium.

4. Lithium-sulfur accumulator according to any preceding claims, wherein the lithium and calcium alloy is a lithium alloy comprising calcium to the extent of 2% to 15% atomic.

5. Lithium-sulfur accumulator according to any preceding claims, wherein the calcium in the lithium and calcium alloy is wholly or partly in the form of CaLi₂.

6. Lithium-sulfur accumulator according to any preceding claims, wherein the negative electrode is self-supporting.

7. Lithium-sulfur accumulator according to any preceding claims, wherein the sulfur-containing active material is elementary sulfur (S₈), lithium disulfide (Li₂S) or a compound comprising at least one disulfide group -S-S-, such as a lithium polysulfide of general formula Li₂Sn (with n ranging from 2 to 8), an organic polysulfide, an organosulfur compound or a polymer comprising disulfide groups.

8. Lithium-sulfur accumulator according to any preceding claims, wherein the sulfur-containing active material is elementary sulfur.

9. Lithium-sulfur accumulator according to any preceding claims, wherein the positive electrode further comprises an electrically conductive additive and optionally an organic binder.

10. Lithium-sulfur accumulator according to claim 9, wherein the electrically conductive additive is a carbon black powder, carbon nanotubes, carbon fibres, metal particles, conductive polymers or mixtures thereof.

11. Lithium-sulfur accumulator according to claim 9 or claim 10, wherein the organic binder is a polymeric binder.

12. Lithium-sulfur accumulator according to any preceding claims, wherein the electrolyte conducting lithium ions is a liquid electrolyte comprising at least one organic solvent and at least one lithium salt.

13. Lithium-sulfur accumulator according to claim 12, wherein the organic solvent or solvents are chosen from solvents comprising one or more ether, nitrile, sulfone and/or carbonate functions.

14. Lithium-sulfur accumulator according to claim 12 or 13, wherein the organic solvent is an ether solvent or a mixture of ether solvents, such as a mixture of tetraethyleneglycol dimethyl ether and 1,3-dioxolane.

15. Lithium-sulfur accumulator according to any preceding claims, wherein the lithium salt is chosen from the group consisting of LiPF₆, LiClO₄, LiBF₄, LiAsF₆, Lil, LiNO₃, LiOH, LiR_{f}SO₃, with R_{f} corresponding to a perfluoroalkyl group comprising 1 to 8 carbon atoms, LiN(CF₃SO₂)₂, LiN(C₂F₅SO₂)₂, LiN(SO₂F)₂, LiCH₃SO₃ or LiB(C₂O₄)₂.
